# EUROPÄISCHE PATENTSCHRIFT

(11) **EP 2 467 196 B1**
(45) Veröffentlichungstag und Bekanntmachung des Hinweises auf die Patenterteilung: **08.01.2014**
(21) Anmeldenummer: 10747842.2
(22) Anmeldetag: 12.08.2010
(51) Int. Cl.: B01D 46/00, B01D 46/10, B01D 29/00, B01D 29/01, B01D 35/06, D04B 21/14, A47L 9/10, A47L 9/12

(54) **FESTSTOFFFILTER, INSBESONDERE FÜR EINEN STAUBSAUGER ODER EINE ABGASREINIGUNGSANLAGE**
SOLIDS FILTER, IN PARTICULAR FOR A VACUUM CLEANER OR AN EXHAUST GAS CLEANING SYSTEM
FILTRE À PARTICULES SOLIDES NOTAMMENT DESTINÉ À UN ASPIRATEUR OU À UN DISPOSITIF DE TRAITEMENT DES GAZ DE COMBUSTION

(30) Priorität: 20.08.2009 DE 102009038230
(43) Veröffentlichungstag der Anmeldung: 27.06.2012
(73) Patentinhaber: Heinrich Essers GmbH & Co. KG, 41849 Wassenberg (DE)
(72) Erfinder: ESSERS, Heinz Willy, 41849 Wassenberg (DE)
(74) Vertreter: Rau, Schneck & Hübner
(86) Internationale Anmeldenummer: PCT/EP2010/061767
(87) Internationale Veröffentlichungsnummer: WO 2011/020772

(56) Entgegenhaltungen:
- EP-A1- 1 050 331
- EP-A1- 1 184 499
- EP-A2- 0 960 645
- WO-A1-96/32878
- WO-A1-2009/135529
- WO-A2-2008/152120
- WO-A2-2009/004612
- DE-A1- 3 216 116
- DE-A1- 3 439 991
- DE-A1- 3 905 565
- DE-A1-102005 046 675
- DE-U1-202004 015 240
- GB-A- 745 030
- US-A1- 2004 003 722
- US-A1- 2004 211 160
- US-A1- 2005 274 152

## Beschreibung

Die Erfindung betrifft einen Feststofffilter, insbesondere für einen Staubsauger oder eine Abgasreinigungsanlage. Die Erfindung betrifft ferner einen Staubsauger und eine Abgasreinigungsanlage mit einem derartigen Feststofffilter.

Beim Einsatz von Staubsaugern ist es bekannt, die Staub-Partikel in sogenannten Staubsaugerbeuteln zu sammeln. Die Staubsaugerbeutel bilden für den vom Staubsauger erzeugten Luft-Strom ein Filterelement, das die Staub-Partikel aus dem Luft-Strom filtert. Nachteilig bei den bekannten Filterelementen ist, dass diese eine schnell abnehmende Filterleistung und eine dementsprechend geringe Standzeit aufweisen. Die Folge davon ist, dass die Filterelemente häufig gewechselt werden müssen.

Aus der US 2004/0003722 A1 ist ein als Abstandsgewirke ausgebildetes Filterelement bekannt, das elektrostatisch ausgebildet ist. Das Abstandsgewirke wird mit seinen Decklagen quer zu der Strömungsrichtung angeordnet.

Aus der US 2005/0274152 A1 ist ein hitzebeständiges Filterelement bekannt. Das Filterelement weist eine Decklage auf, von der aus sich borstenartige Fäden strecken. Die Decklage ist zur Fixierung der borstenartigen Fäden mit einer Beschichtung versehen.

Aus der WO 2009/004612 A2 ist ein als Abstandsgewirke ausgebildetes Filterelement bekannt. Zum Aufbau des Filters können mehrere dieser Filterelemente stapelartig hintereinander angeordnet sein.

Die WO 2008/152120 A2 offenbart die Verwendung eines textiltechnisch hergestellten dreidimensionalen Fadensystems zur antimikrobiellen Behandlung einer Nutzflüssigkeit.

Aus der DE 10 2005 046 675 A1 ist ein als Abstandsgewirke ausgebildetes Filterelement bekannt. Das Filterelement ist zu einer Filtertasche geformt, bei der der Rand flüssigkeitsdicht versiegelt ist und zu reinigendes Abwasser durch mehrere Abflussöffnungen austritt.

Aus der nachveröffentlichten WO 2009/135529 A1 ist ein als Abstandsgewirke ausgebildetes Filterelement bekannt.

Aus der DE 20 2004 015 240 U1 ist ein Filterelement zur Installation in Trinkwassersystemen bekannt, das als Abstandsgewirke ausgebildet ist und eine keimtötende Aktivität aufweist.

Aus der EP 1 184 499 A1 ist ein Abstandsgewirke bekannt, das zur Verwendung in Filtern geeignet ist.

Der Erfindung liegt die Aufgabe zugrunde, einen Feststofffilter, insbesondere für einen Staubsauger oder eine Abgasreinigungsanlage, zu schaffen, der eine hohe Filterleistung und eine lange Standzeit aufweist.

Diese Aufgabe wird durch einen Feststofffilter mit den Merkmalen des Anspruchs 1 gelöst. Erfindungsgemäß wurde erkannt, dass das mindestens eine als Abstandsgewirke ausgebildete Filterelement einen hohen Fluid-Durchsatz in Verbindung mit einer hohen Filterleistung aufweist. Das Abstandsgewirke nimmt aus dem Fluid-Strom bzw. Luft-Strom die darin enthaltenen Feststoffe auf. Dies erfolgt insbesondere im Inneren des Abstandsgewirkes, wodurch dieses trotz der ausgefilterten Feststoffe über eine vergleichsweise lange Zeit eine hohe Filterleistung beibehält. Der Feststofffilter weist hierdurch eine lange Standzeit auf. Darüber hinaus wird durch den hohen Fluid-Durchsatz bzw. Luft-Durchsatz eine Senkung des Geräuschpegels des Saug- bzw. Filtervorgangs und des Motorgeräusches des Staubsaugers erzielt. Die angestrebte Filterleistung ist dementsprechend bei geringeren Antriebsmotordrehzahlen und einer geringeren Erwärmung des Staubsaugers möglich.

Weiterhin kann das Abstandsgewirke als Mehrweg-Filterelement eingesetzt werden, das bei Bedarf oder am Ende einer maximalen Standzeit ausgespült, ausgeblasen, ausgepresst und/oder mittels Ultraschall gereinigt werden kann, um einen hohen Anteil bzw. alle gesammelten Feststoffe wieder zur Entsorgung abzugeben. Durch eine derartige Reinigung kann mit dem Abstandsgewirke wieder im Wesentlichen die ursprüngliche Filterleistung erzielt werden. Durch den Einsatz als Mehrweg-Filterelement kann im Vergleich zu herkömmlichen Wegwerf-Filterelementen eine Kostenersparnis erzielt werden.

Darüber hinaus kann je nach Einsatzzweck das Abstandsgewirke wirktechnisch konstruktiv mehr oder wenig dicht hergestellt und so an eine gewünschte Filterwirkung angepasst werden. Zum Ausfiltern von feinen bis mittleren Feststoff-Partikeln bzw. Staub-Partikeln wird das Abstandsgewirke beispielsweise dichter hergestellt als zum Ausfiltern von mittleren bis groben Feststoff-Partikeln. Darüber hinaus kann das Abstandsgewirke eine beliebige Anzahl an geschlossenen und/oder offenen Flanken aufweisen, wodurch das Volumen des Fluid-Durchsatzes, die Filterleistung, der Geräuschpegel des Filter- bzw. Saugvorgangs sowie die Drehzahl des Antriebsmotors des Staubsaugers anpassbar sind. Hierdurch können insbesondere auch Energiekosten eingespart werden.

Entsprechendes gilt für den Einsatz des erfindungsgemäßen Feststofffilters in Abgasreinigungsanlagen, beispielsweise von Kraftwerken. Aus dem Fluid-Strom bzw. Abgas-Strom können mit einer hohen Filterleistung Feststoff-Partikel bzw. Abgas-Partikel ausgefiltert werden. Antriebsmotoren von Lüftern bzw. Gebläsen zur Strömungserzeugung können energiesparend betrieben werden.

Dadurch, dass der Feststofffilter mehrere in der Strömungsrichtung nacheinander angeordnete Filterelemente aufweist, wobei mindestens ein Filterelement als Abstandsgewirke ausgebildet ist, wird eine Optimierung der Filterwirkung und der Standzeit ermöglicht. Durch das nacheinander Anordnen von mehreren Filterelementen wird ein mehrschichtiger Aufbau mit einer gestuften Filterwirkung erzielt. Die Filterelemente sind in der Strömungsrichtung ausgehend von einem Grob-Filterelement bis zu einem Feinst-Filterelement mehrschichtig gestaffelt. Die Filterelemente können als Abstandsgewirke und/oder als Schaumstoffelemente mit je nach gewünschter Filterwirkung unterschiedlichen Dichten ausgebildet sein. Durch die Anordnung mehrerer Filterelemente hintereinander kann ein beliebig dickes Filterelementpaket aufgebaut werden. Das mindestens eine Abstandsgewirke kann in der Strömungsrichtung mit einer Höhe von bis zu 150 mm ausgebildet sein. Die Filterelemente sind beispielsweise lose nacheinander in dem Gehäuse angeordnet. Durch das lose Anordnen der Filterelemente weist der Feststofffilter einen einfachen und wartungsfreundlichen Aufbau auf.

Dadurch, dass die Abstandsfäden des mindestens einen Abstandsgewirkes in einer Ebene verlaufende Abstandsfadengruppen mit einer IXI-Form ausbilden, weist der Feststofffilter eine hohe Druckelastizität und Formstabilität auf. Druckbelastungen können von den Abstandsfäden elastisch aufgenommen werden, wobei diese nach dem Wegfall der Druckbelastung wieder in die ursprüngliche Form zurückkehren. Aufgrund der hohen Formstabilität kann das Abstandsgewirke in der Strömungsrichtung mit einer Höhe von bis zu 60 mm, insbesondere von bis zu 80 mm, und insbesondere von bis zu 100 mm ausgebildet werden, ohne dass sich dieses aufgrund von Druckbelastungen dauerhaft verformt. Dadurch, dass mindestens ein Filterelement zusätzlich elektrostatisch ausgebildet ist, wird die Filterwirkung verbessert. Filterelemente aus elektrostatisch aufgeladenen Fasern sind als Elektrete bzw. Elektret-Filterelemente bekannt und handelsüblich. Derartige Filterelemente können in der Strömungsrichtung eine Höhe von 1 mm bis 500 mm, beispielsweise von 3 mm aufweisen. Vorzugsweise ist das Abstandsgewirke als elektrostatisches Filterelement ausgebildet.

Ein Feststofffilter nach Anspruch 2 gewährleistet eine hohe Filterwirkung für grobe Feststoff-Partikel. Das Abstandsgewirke ist beispielsweise das erste von mehreren in Strömungsrichtung nacheinander angeordneten Filterelementen.

Ein Feststofffilter nach Anspruch 3 gewährleistet einen hohen Fluid-Durchsatz bei gleichzeitig hoher Filterleistung.

Ein Feststofffilter nach Anspruch 4 ermöglicht eine hohe Flexibilität bei der Einstellung der Filterwirkung des Abstandsgewirkes. Je höher die Maschendichte ist, desto höher ist die Filterwirkung für feine Feststoff-Partikel. Die Anzahl der Maschenreihen pro cm in der Herstellungsrichtung und die Maschengröße bedingen die Maschendichte pro cm². Die Filterwirkung des Abstandsgewirkes ist umso höher, je mehr Maschenreihen pro cm Herstellungslänge eingetragen werden und je kleiner die Maschen sind. In Abhängigkeit der Maschendichte können bedarfskonforme unterschiedlich ausgelegte Filterelemente gefertigt werden.

Ein Feststofffilter nach Anspruch 5 gewährleistet eine hohe Flexibilität bei der Einstellung des Fluid-Durchsatzes, der Filterleistung, des Geräuschpegels des Filter- bzw. Saugvorgangs und der Speicher- bzw. Reinigungseigenschaften. Das Abstandsgewirke ist beispielsweise im Wesentlichen rechteckig ausgebildet und weist mindestens eine, mindestens zwei, mindestens drei oder vier geschlossene Flanken auf. Durch das umfangsseitige Schließen des Abstandsgewirkes kann der Strömungswiderstand für den Fluidstrom eingestellt werden. Darüber hinaus kann der Fluidstrom durch das umfangsseitige teilweise Verschließen des Abstandsgewirkes gezielt gelenkt werden, was zu einer gezielten Verteilung der ausgefilterten Feststoffe führt. Das umfangsseitig vollständige Schließen des Abstandsgewirkes führt zu dem höchsten Strömungswiderstand. Wird das Abstandsgewirke nur teilweise umfangsseitig geschlossen, ist der Strömungswiderstand entsprechend reduziert. Durch die Lage der geschlossenen Umfangsbereiche bzw. der offenen Umfangsbereiche kann der Fluidstrom durch das Abstandsgewirke gelenkt werden. Beispielsweise kann ein auf zwei einander gegenüberliegenden Seiten offenes, in Strömungsrichtung des Fluidstroms zuerst durchströmtes, auf den Decklagen offenporiges Abstandsgewirke zunächst grobe Feststoffe aufnehmen. Ein oder mehrere in Strömungsrichtung nachgeordnete und auf ihren Decklagen kleinporiger ausgebildete Abstandsgewirke, die umfangsseitig vollständig geschlossen sind, können dagegen feinere und feinste Feststoffe bzw. Feststoff-Partikel aufnehmen. Bei im Wesentlichen rechteckigen Abstandsgewirken können einzelne Flanken geschlossen ausgebildet sein, wobei diese an gegenüberliegenden Seiten und/oder an benachbarten Seiten des Abstandsgewirkes liegen können. Darüber hinaus können einzelne Flanken ganz oder nur teilweise geschlossen sein. Die Abstandsgewirke können somit bedarfsgerecht umfangsseitig teilweise und/oder vollständig geschlossen ausgebildet sein, wobei die Lage der geschlossenen bzw. offenen Umfangsbereiche ebenfalls beliebig sein kann. Das Abstandsgewirke kann durch konturierendes Trennen und dann Schweißen oder durch Trennschweißen und weitgehend scherfestes Verbinden der Decklagen mittels Ultraschall teilweise oder ganz geschlossen ausgebildet werden. Das Abstandsgewirke kann als Strangware ohne überlappende Decklagen oder mit mindestens einer überlappenden Decklage ausgebildet sein. Das Abstandsgewirke kann die Form eines Vielecks, beispielsweise Rechtecks, eines Kreises oder einer beliebigen anderen Form haben.

Ein Feststofffilter nach Anspruch 6 ermöglicht ein einfaches umfangsseitiges Verschließen des Abstandsgewirkes durch die Decklagen. Vorzugsweise wird eine der beiden Decklagen bzw. werden beide Decklagen in der Herstellungsrichtung des Abstandsgewirkes überlappend ausgebildet und miteinander verbunden. Das Verbinden erfolgt beispielsweise nach einem Trennvorgang, z. B. einem Stanzvorgang, im Bereich der überlappenden Decklagen, die über das eigentliche Filterelement-Nutzmaß des Abstandsgewirkes hinausragen, und mit einem anschließenden Verbindungsvorgang. Das umfangsseitige Verschließen des Abstandsgewirkes kann beispielsweise mittels Ultraschall-Trennschweißens erfolgen. Ein derartiges Verbinden ist für jede einzelne Flanke bedarfsweise mit entsprechend überlappenden Decklagen an der zu verschließenden Flanke des Abstandsgewirkes durchführbar.

Ein Feststofffilter nach Anspruch 7 weist einen geringen Strömungswiderstand auf. Eine umfangsseitig vollständig offene Ausbildung bzw. vollständig flankenoffene Ausbildung des Abstandsgewirkes ist insbesondere dann vorteilhaft, wenn mindestens ein dichteres Filterelement, wie beispielsweise ein dichteres Abstandsgewirke oder ein Schaumstoffelement, nachgeordnet sind.

Ein Feststofffilter nach Anspruch 8 gewährleistet ein Ausfiltern von Feststoff-Partikeln unterschiedlicher Größe in mehreren Filterstufen. Die Abstandsgewirke weisen in der Strömungsrichtung eine ansteigende Dichte bzw. Maschendichte auf, so dass in der Strömungsrichtung zunehmend auch feine Feststoff-Partikel ausgefiltert werden.

Ein Feststofffilter nach Anspruch 9 ist einfach aufgebaut und weist eine verbesserte Filterwirkung auf. Die elektrostatische Wirkung wird in das Abstandsgewirke selbst integriert, so dass ein weiteres Filterelement eingespart werden kann. Bei der Herstellung des Abstandsgewirkes können in der Herstellungsanlage Fäden vorgelegt werden, die entsprechend den Fäden bzw. Fasern der bekannten Elektret-Filterelemente hergestellt und unterschiedlich elektrostatisch geladen sind, so dass bei der Gewirkebildung die konstruktiven Fäden der IXI-Konstruktion elektrostatisch inhomogen miteinander kombiniert werden.

Ein Feststofffilter nach Anspruch 10 ermöglicht eine hohe Flexibilität bei der Einstellung der gewünschten Filterwirkung. Insbesondere Feinst-Filterelemente können auf einfache Weise durch Schaumstoffelemente hergestellt werden. Die Schaumstoffelemente weisen in der Strömungsrichtung eine Höhe im Bereich von 3 mm bis 500 mm, beispielsweise 5 mm auf. Sie bestehen vorzugsweise aus einem auswaschbaren Schaumstoffma terial, wie beispielsweise aus einem retikulierten Schaumstoffmaterial. Die sogenannte Retikulierung ist ein Verfahren, mit dem die Zellhäute eines Schaumstoffes nahezu vollständig entfernt werden. Die so erzielte maximale Offenzelligkeit gewährleistet einen geringen Strömungswiderstand gegenüber Fluiden. Die Porengröße der Schaumstoffelemente beträgt je nach gewünschter Filterwirkung 10 bis 80 PPI (Poren Pro Inch), was ungefähr 2 bis 26 Poren pro Zentimeter entspricht. Die Schaumstoffelemente sind beispielsweise aus Polyester, Polyether und/oder Ester. Derartige Schaumstoffelemente sind bekannt und beispielsweise unter der Markenbezeichnung PantaCell im Handel erhältlich. Bei Verwendung eines fein filternden retikulierten Schaumstoffelements, das gut von dem Fluidstrom durchströmbar ist, kann dieses auf der Ausströmseite mit einem als weiteres Filterelement dienenden Abstandsgewirke mittels punktueller Kaschierung verbunden werden. Durch ein geringfügiges Übermaß des Schaumstoffelements im Verhältnis zu den umgebenden Filterelementen kann eine geräuschneutrale Klemm-Positionierung des Schaumstoffelements sowie des damit verbundenen Abstandsgewirkes erzielt werden. Das Schaumstoffelement und das damit verbundene Abstandsgewirke sind aufgrund ihres Aufbaus gut reinigbar und können mehrfach wieder eingesetzt werden.

Ein Feststofffilter nach Anspruch 11 gewährleistet ein Ausfiltern von feinsten Feststoff-Partikeln. Das Schaumstoffelement ist vorzugsweise als letztes Filterelement in dem Gehäuse angeordnet.

Ein Staubsauger nach Anspruch 12 ist wartungsarm und weist eine hohe Filterleistung sowie eine lange Standzeit auf.

Eine Abgasreinigungsanlage nach Anspruch 13 ist wartungsarm und weist eine hohe Filterleistung sowie eine lange Standzeit auf.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Darstellung eines Staubsaugers bzw. einer Abgasreinigungsanlage mit einem Feststofffilter gemäß einem ersten Ausführungsbeispiel,
- Fig. 2: eine Schnittdarstellung des Feststofffilters in Fig. 1 mit einem Abstandsgewirke,
- Fig. 3: eine schematische Darstellung des Abstandsgewirkes in Fig. 2,
- Fig. 4: eine Schnittdarstellung eines Feststofffilters gemäß einem zweiten Ausführungsbeispiel,
- Fig. 5: eine Schnittdarstellung eines Feststofffilters gemäß einem dritten Ausführungsbeispiel,
- Fig. 6: eine Schnittdarstellung eines Feststofffilters gemäß einem vierten Ausführungsbeispiel, und
- Fig. 7: eine Schnittdarstellung eines Feststofffilters gemäß einem fünften Ausführungsbeispiel.

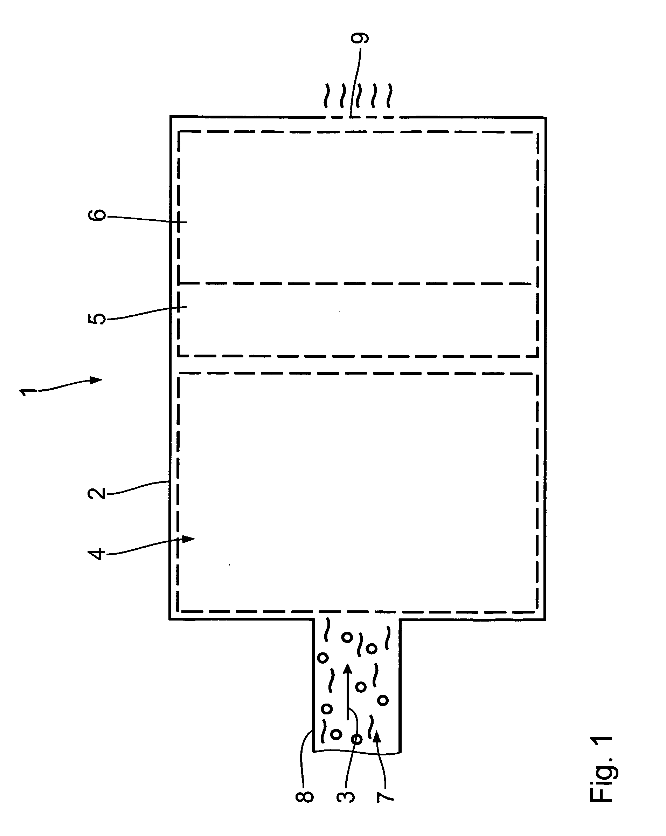

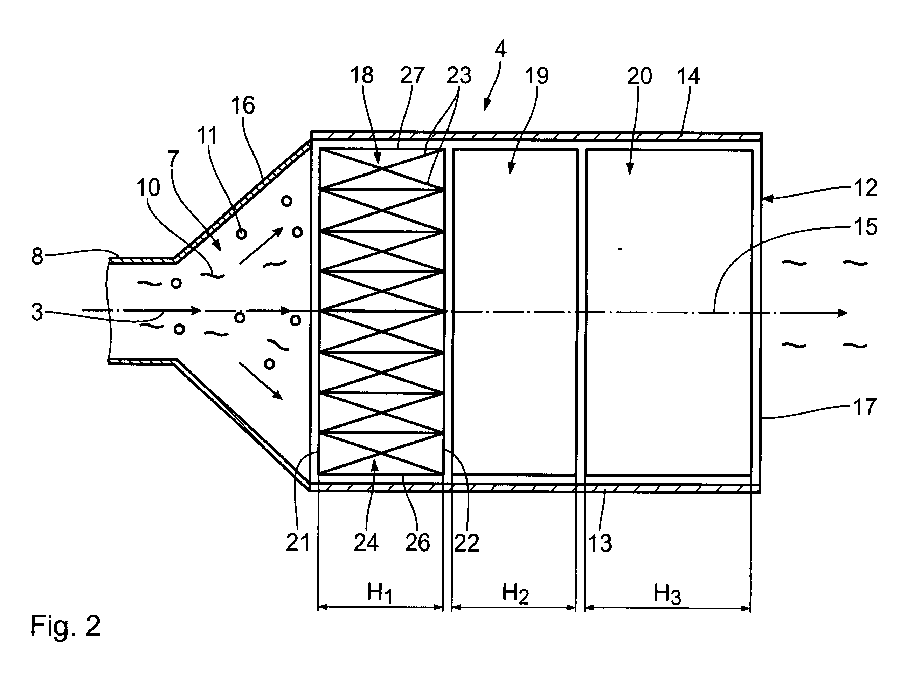

Nachfolgend wird unter Bezugnahme auf die Fig. 1 bis 3 ein erstes Ausführungsbeispiel der Erfindung beschrieben. Ein Staubsauger bzw. eine Abgasreinigungsanlage 1 weist ein Staubsauger-Gehäuse bzw. ein Anlagen-Gehäuse 2 auf, in dem in einer Strömungsrichtung 3 nacheinander ein Feststofffilter 4, ein Gebläse 5 und ein Antriebsmotor 6 angeordnet sind. Der Antriebsmotor 6 dient zum Antreiben des Gebläses 5, das in der Strömungsrichtung 3 einen Fluid-Strom 7 bzw. Luft-Strom durch das Gehäuse 2 erzeugt. Der Fluid-Strom 7 tritt durch ein Saugrohr 8 in das Gehäuse 2 ein und verlässt dieses wieder durch ein Gitter 9.

Der Fluid-Strom 7 besteht aus Luft bzw. Abgas 10 und darin enthaltenen Feststoffen 11 bzw. Feststoff- oder Abgas-Partikeln. Zum Ausfiltern der Feststoffe 11 durchströmt der Fluid-Strom 7 den Feststofffilter 4. Der Feststofffilter 4 weist ein Gehäuse 12 mit einem quaderförmigen Grundkörper 13 auf, der an einer Oberseite durch einen Deckel 14 verschlossen bzw. geöffnet werden kann. In das Gehäuse 12 mündet im Wesentlichen konzentrisch zu einer Mittellängsachse 15 des Gehäuses 12 eine trichterförmige Fluid-Zuführung 16. Die Fluid-Zuführung 16 ist mit dem Saugrohr 8 verbunden und erweitert sich in der Strömungsrichtung 3. Der Fluid-Zuführung 16 ist in der Strömungsrichtung 3 eine Fluid-Abführung 17 nachgeordnet, die stirnseitig in dem Gehäuse 12 ausgebildet ist.

Zum Ausfiltern der Feststoffe 11 aus dem Fluid-Strom 7 sind drei Filterelemente 18, 19 und 20 in der Strömungsrichtung 3 nacheinander in dem Gehäuse 12 lose angeordnet. Die Filterelemente 18 bis 20 sind rechteckig bzw. quadratisch ausgebildet und weisen beispielsweise eine Seitenlänge von 15 cm x 15 cm auf.

Das erste Filterelement 18 ist als Abstandsgewirke ausgebildet und an einer der Fluid-Zuführung 16 zugewandten Seite in dem Gehäuse 12 angeordnet. Das Abstandsgewirke 18 weist zwei quer zu der Strömungsrichtung 3 angeordnete Decklagen 21 und 22 sowie zwischen diesen verlaufende Abstandsfäden 23 auf. Die Abstandsfäden 23 bilden in parallel zu der Strömungsrichtung 3 verlaufenden Ebenen Abstandsfadengruppen 24 mit einer IXI-Form aus. Hinsichtlich des Detailaufbaus des Abstandsgewirkes 18 wird auf die DE 100 26 405 B4 verwiesen.

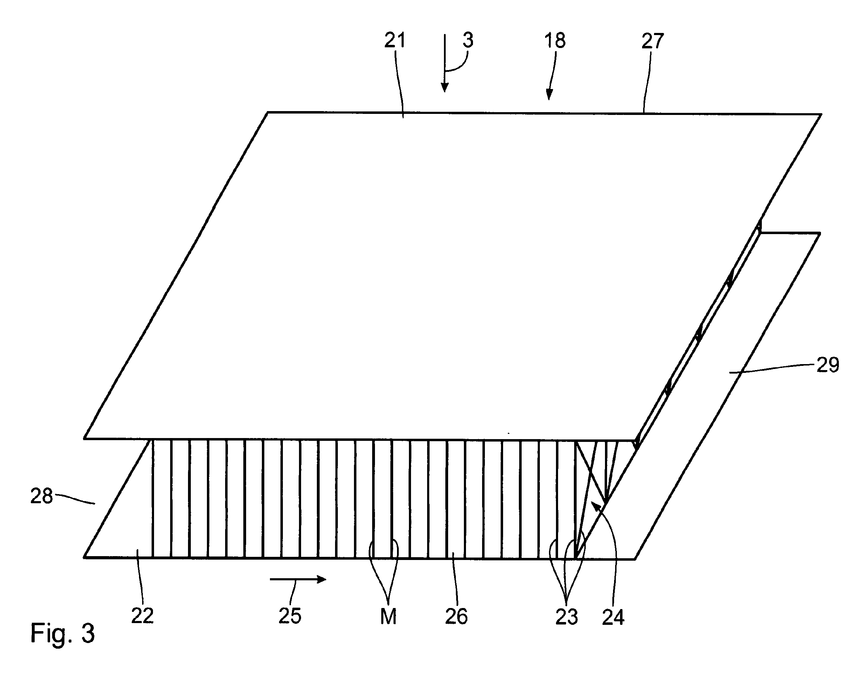

Das Abstandsgewirke 18 weist in der Strömungsrichtung 3 eine Höhe H₁ im Bereich von 3 mm bis 60 mm, insbesondere im Bereich von 20 mm bis 55 mm, und insbesondere im Bereich von 30 mm bis 50 mm auf. Das Abstandsgewirke 18 hat in einer quer zu der Strömungsrichtung 3 verlaufenden Herstellungsrichtung 25 eine Maschendichte im Bereich von 4 bis 18 Maschenreihen/cm, insbesondere im Bereich von 4 bis 14 Maschenreihen/cm, und insbesondere von 4 bis 10 Maschenreihen/cm und ist dementsprechend als Grob-Filterelement ausgebildet. In Fig. 3 sind zwei Maschenreihen M beispielhaft gekennzeichnet.

Das Abstandsgewirke 18 weist aufgrund seiner rechteckigen Form vier Flanken 26 bis 29 auf. Die Flanken 26 und 27 sind offen ausbildet, wohingegen die Flanken 28 und 29 geschlossen sind. An den geschlossenen Flanken 28 und 29 überlappen die Decklagen 21 und 22 den durch die Abstandsfäden 23 gebildeten Bereich, wobei die Decklagen 21 und 22 in dem überlappenden Bereich miteinander verbunden sind.

Das zweite Filterelement 19 ist als elektrostatisches Vlies ausgebildet und weist in der Strömungsrichtung 3 eine Höhe H₂ im Bereich von 1 mm bis 500 mm auf. Das Filterelement 19 wird auch als Elektret-Filterelement bezeichnet.

Das dritte Filterelement 20 ist als Schaumstoffelement ausgebildet und an der der Fluid-Abführung 17 zugewandten Seite in dem Gehäuse 12 angeordnet. Das Schaumstoffelement 20 ist als Feinst-Filterelement ausgebildet und weist eine entsprechende Porengröße auf. Das Schaumstoffelement 20 weist in der Strömungsrichtung 3 eine Höhe H₃ im Bereich von 3 mm bis 500 mm auf.

In dem Abstandsgewirke 18 werden zunächst grobe Feststoffe 11 ausgefiltert. Durch die elektrostatische Filterwirkung des zweiten Filterelements 19 werden elektrostatisch geladene Feststoffe 11 wirkungsvoll ausgefiltert. In dem nachgeordneten Schaumstoffelement 20 werden schließlich feinste Feststoffe 11 ausgefiltert. Insbesondere das Abstandsgewirke 18 kann nach einer entsprechenden Reinigung bzw. Aufbereitung erneut in dem Feststofffilter 4 eingesetzt werden. Das Abstandsgewirke 18 dient dementsprechend als Mehrweg-Filterelement. Darüber hinaus weist dieses einen hohen Fluid-Durchsatz in Verbindung mit einer hohen Filterleistung auf.

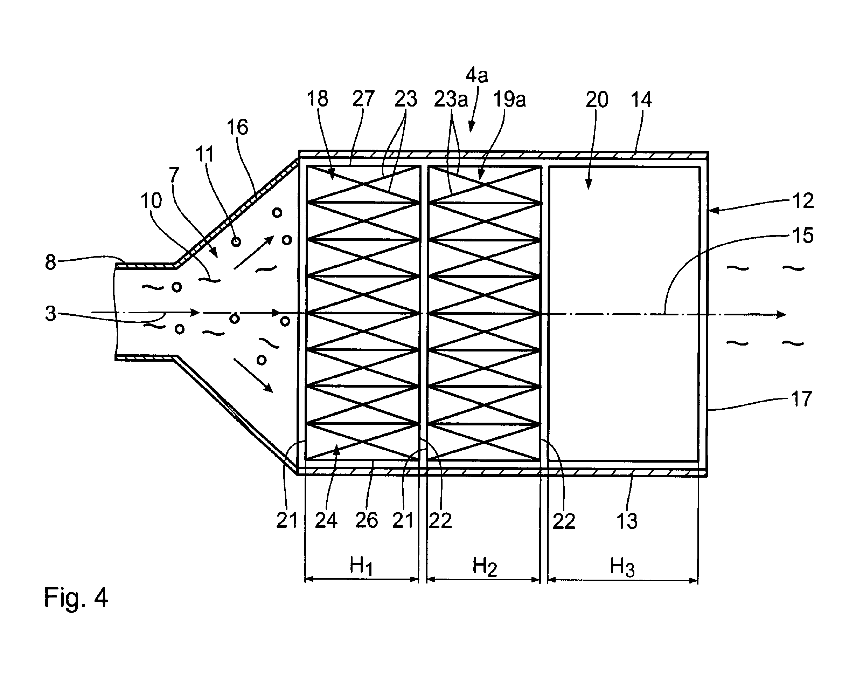

Nachfolgend wird unter Bezugnahme auf Fig. 4 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche Teile erhalten dieselben Bezugszeichen mit einem nachgestellten a. Das zweite Filterelement 19a ist als vollständig flankenoffenes Abstandsgewirke ausgebildet. Die Abstandsfäden 23a des Abstandsgewirkes 19a sind elektrostatisch ausgebildet und stellen eine elektrostatische Filterwirkung bereit. Darüber hinaus weist das zweite Abstandsgewirke 19a eine im Vergleich zu dem ersten Abstandsgewirke 18 größere Maschendichte auf, um feinere Feststoffe 11 ausfiltern zu können. Der Feststofffilter 4a weist aufgrund der Abstandsgewirke 18 und 19a eine lange Standzeit auf. Hinsichtlich der weiteren Funktionsweise wird auf das erste Ausführungsbeispiel verwiesen.

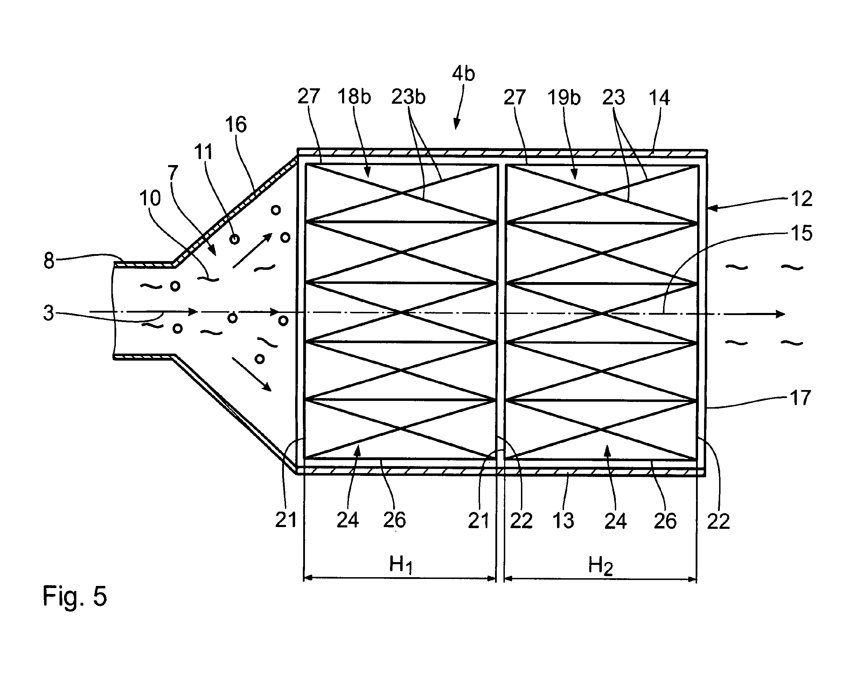

Nachfolgend wird unter Bezugnahme auf Fig. 5 ein drittes Ausführungsbeispiel der Erfindung beschrieben. Konstruktiv identische Teile behalten dieselben Bezugszeichen wie bei den vorangegangenen Ausführungsbeispielen, auf deren Beschreibung hiermit verwiesen wird. Konstruktiv unterschiedliche Teile erhalten dieselben Bezugszeichen mit einem nachgestellten b. Der Feststofffilter 4b weist zwei Filterelemente 18b und 19b auf, die als Abstandsgewirke ausgebildet sind. Das vollständig flankenoffene Abstandsgewirke 18b weist elektrostatisch ausgebildete Abstandsfäden 23b auf. Das zweite Abstandsgewirke 19b weist im Vergleich zu dem ersten Abstandsgewirke 18b eine größere Maschendichte auf. Die Maschendichte des Abstandsgewirkes 19b liegt im Bereich von 4 bis 18 Maschenreihen/cm, insbesondere im Bereich von 8 bis 18 Maschenreihen/cm, und insbesondere im Bereich von 11 bis 18 Maschenreihen/cm. Die Abstandsfäden 23 sind nicht elektrostatisch ausgebildet. Das Abstandsgewirke 19b ist an allen Flanken 26 bis 29 geschlossen. Hinsichtlich der weiteren Funktionsweise wird auf die vorangegangenen Ausführungsbeispiele verwiesen.

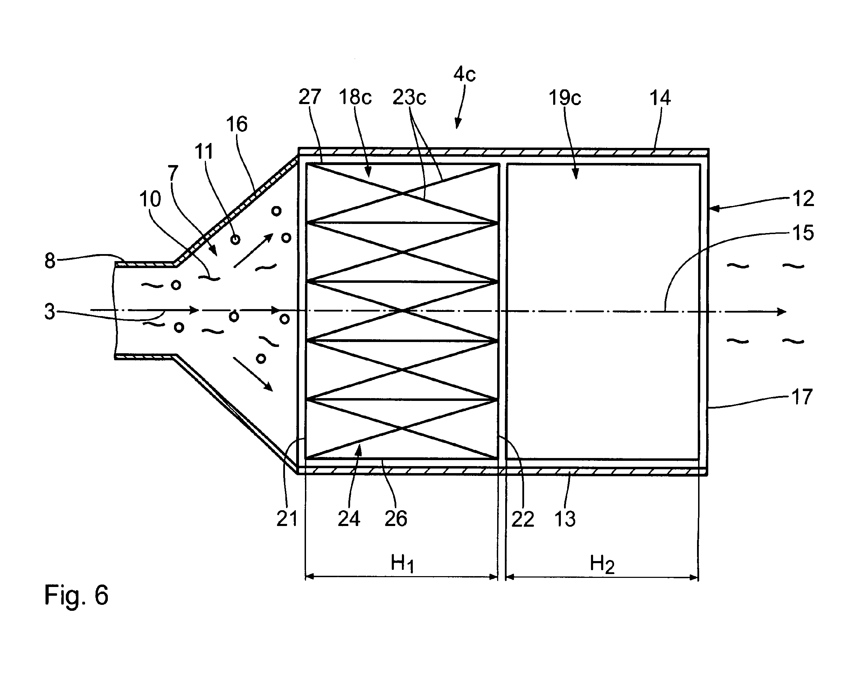

Nachfolgend wird unter Bezugnahme auf Fig. 6 ein viertes Ausführungsbeispiel der Erfindung beschrieben. Konstruktiv identische Teile erhalten dieselben Bezugszeichen wie bei den vorangegangenen Ausführungsbeispielen, auf deren Beschreibung hiermit verwiesen wird. Konstruktiv unterschiedliche Teile erhalten dieselben Bezugszeichen mit einem nachgestellten c. Der Feststofffilter 4c weist zwei Filterelemente 18c und 19c auf. Das erste Filterelement 18c ist ein vollständig flankenoffenes Abstandsgewirke mit elektrostatisch ausgebildeten Abstandsfäden 23c. Das zweite Filterelement 19c ist ein Schaumstoffelement und wirkt aufgrund der Porengröße als Feinst-Filterelement. Hinsichtlich der weiteren Funktionsweise wird auf die vorangegangenen Ausführungsbeispiele verwiesen.

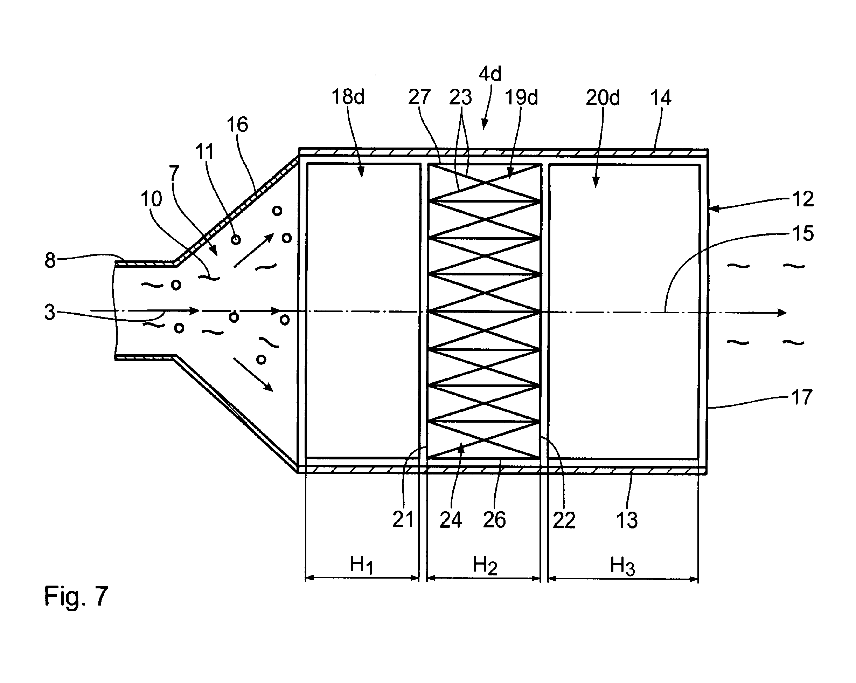

Nachfolgend wird unter Bezugnahme auf Fig. 7 ein fünftes Ausführungsbeispiel der Erfindung beschrieben. Konstruktiv identische Teile erhalten dieselben Bezugszeichen wie bei den vorangegangenen Ausführungsbeispielen, auf deren Beschreibung hiermit verwiesen wird. Konstruktiv unterschiedliche Teile erhalten dieselben Bezugszeichen mit einem nachgestellten d. Der Feststofffilter 4d weist drei Filterelemente 18d, 19d und 20d auf. Das erste Filterelement 18d ist als Schaumstoffelement ausgebildet und weist eine Porengröße derart auf, dass es als Grob-Filterelement wirkt. Das zweite Filterelement 19d ist als Abstandsgewirke ausgebildet und an drei Flanken 26, 28 und 29 geschlossen. Das dritte Filterelement 20d ist als Schaumstoffelement ausgebildet und weist eine im Vergleich zu dem Filterelement 18d kleinere Porengröße auf. Das Filterelement 20d wirkt dementsprechend als Feinst-Filterelement. Hinsichtlich der weiteren Funktionsweise wird auf die vorangegangenen Ausführungsbeispiele verwiesen.

Prinzipiell können beliebig viele Filterelemente 18 bis 20d in beliebiger Kombination in dem Gehäuse 12 nacheinander angeordnet sein.

## Patentansprüche

1. Feststofffilter, insbesondere für einen Staubsauger oder eine Abgasreinigungsanlage, mit
- einem Gehäuse (12),
- einer in das Gehäuse (12) mündenden Fluid-Zuführung (16),
- einer Fluid-Abführung (17), die
-- der Fluid-Zuführung (16) in einer Strömungsrichtung (3) nachgeordnet ist und
-- in dem Gehäuse (12) ausgebildet ist,
- mehreren Filterelementen (18, 19, 20; 18, 19a, 20; 18b, 19b;18c, 19c; 18d, 19d, 20d) zum Ausfiltern von Feststoffen (11) aus einem Fluid-Strom (7),
-- die zwischen der Fluid-Zuführung (16) und der Fluid-Abführung (17) in dem Gehäuse (12) angeordnet sind,
-- wobei mindestens ein Filterelement als Abstandsgewirke (18; 18, 19a; 18b, 19b; 18c; 19d) ausgebildet ist, das
--- zwei quer zu der Strömungsrichtung (3) angeordnete Decklagen (21, 22) und
--- zwischen den Decklagen (21, 22) verlaufende Abstandsfäden (23; 23a; 23b; 23c) aufweist,
**dadurch gekennzeichnet,**
**dass** die Filterelemente (18, 19, 20; 18, 19a, 20; 18b, 19b; 18c, 19c; 18d, 19d, 20d) derart in der Strömungsrichtung (3) nacheinander in dem Gehäuse (12) angeordnet sind, dass ein mehrschichtiger Aufbau mit einer gestuften Filterwirkung erzielt wird,
**dass** mindestens ein Filterelement als Abstandsgewirke (18; 18, 19a; 18b, 19b; 18c; 19d) ausgebildet ist, dessen Abstandsfäden (23; 23a; 23b; 23c) in einer Ebene verlaufende Abstandsfadengruppen (24) mit einer IXI-Form ausbilden, und
**dass** mindestens ein Filterelement (19; 19a; 18b; 18c) elek-trostatisch ausgebildet ist.

2. Feststofffilter nach Anspruch 1, **dadurch gekennzeichnet, dass** das Abstandsgewirke (18; 18b; 18c) an einer der Fluid-Zuführung (16) zugewandten Seite angeordnet ist.

3. Feststofffilter nach Anspruch 1 oder 2, **dadurch gekennzeichnet, dass** das Abstandsgewirke (18; 18, 19a; 18b, 19b; 18c; 19d) in der Strömungsrichtung (3) eine Höhe (H) im Bereich von 3 mm bis 60 mm, insbesondere im Bereich von 20 mm bis 55 mm, und insbesondere im Bereich von 30 mm bis 50 mm aufweist.

4. Feststofffilter nach einem der Ansprüche 1 bis 3, **dadurch gekennzeichnet, dass** das Abstandsgewirke (18; 18, 19a; 18b, 19b; 18c; 19d) quer zu der Strömungsrichtung (3) eine Maschendichte im Bereich von 4 bis 18 Maschenreihen/cm, insbesondere im Bereich von 4 bis 10 Maschenreihen/cm, und insbesondere im Bereich von 11 bis 18 Maschenreihen/cm aufweist.

5. Feststofffilter nach einem der Ansprüche 1 bis 4, **dadurch gekennzeichnet, dass** das Abstandsgewirke (18; 19b; 19d) umfangsseitig zumindest teilweise geschlossen ausgebildet ist.

6. Feststofffilter nach Anspruch 5, **dadurch gekennzeichnet, dass** mindestens eine der Decklagen (21, 22) den durch die Abstandsfäden (23) gebildeten Bereich quer zu der Strömungsrichtung (3) überlappt und zum Verschließen mit der gegenüberliegenden Decklage (21, 22) verbunden ist.

7. Feststofffilter nach einem der Ansprüche 1 bis 4, **dadurch gekennzeichnet, dass** das Abstandsgewirke (19a; 18b; 18c) umfangsseitig vollständig offen ausgebildet ist.

8. Feststofffilter nach einem der Ansprüche 1 bis 7, **dadurch gekennzeichnet, dass** mehrere Abstandsgewirke (18, 19a; 18b, 19b) nacheinander in dem Gehäuse (12) angeordnet sind und deren Maschendichte in der Strömungsrichtung (3) zunimmt.

9. Feststofffilter nach einem der Ansprüche 1 bis 8, **dadurch gekennzeichnet, dass** zumindest ein Teil der Abstandsfäden (23a; 23b; 23c) elektrostatisch ausgebildet ist.

10. Feststofffilter nach einem der Ansprüche 1 bis 9, **dadurch gekennzeichnet, dass** mindestens eines der Filterelemente als Schaumstoffelement (20; 19c; 18d, 20d) ausgebildet ist.

11. Feststofffilter nach einem der Ansprüche 1 bis 10, **dadurch gekennzeichnet, dass** das Schaumstoffelement (20; 19c; 20d) an einer der Fluid-Abführung (17) zugewandten Seite angeordnet ist.

12. Staubsauger mit einem Feststofffilter (4; 4a bis 4d) nach einem der Ansprüche 1 bis 11.

13. Abgasreinigungsanlage, insbesondere für ein Kraftwerk, mit einem Feststofffilter (4; 4a bis 4d) nach einem der Ansprüche 1 bis 11.

## Claims

1. Solids filter, in particular for a vacuum cleaner or an exhaust gas cleaning system, comprising
- a housing (12);
- a fluid inlet (16) which opens into the housing (12);
- a fluid discharge (17) which
-- is arranged downstream of the fluid inlet (16) when seen in a direction of flow (3), and
-- is formed in the housing (12),
- a number of filter elements (18, 19, 20; 18, 19a, 20; 18b, 19b; 18c, 19c; 18d, 19d, 20d) for filtering solids (11) from a fluid flow (7),
-- which are arranged in the housing (12) between the fluid inlet (16) and the fluid discharge (17),
-- with at least one filter element being configured as a spacer fabric (18; 18, 19a; 18b, 19b; 18c; 19d) which has
--- two cover layers (21, 22) arranged transverse to the direction of flow (3); and
--- spacer fibers (23; 23a; 23b; 23c) extending between the cover layers (21, 22),
**characterized in**
**that** the filter elements (18, 19, 20; 18, 19a, 20; 18b, 19b; 18c, 19c; 18d, 19d, 20d) are arranged in the housing (12) one behind the other when seen in the direction of flow (3) in such a way that a multilayer configuration providing a staged filtering action is achieved,
**that** at least one filter element is configured as a spacer fabric (18; 18, 19a; 18b, 19b; 18c; 18d) the spacer fibers (23; 23a; 23b; 23c) of which form spacer fiber groups (24) with an IXI-form which extend in one plane; and
**that** at least one filter element (19; 19a; 18b; 18c) has an electrostatic effect.

2. Solids filter according to claim 1, **characterized in that** the spacer fabric (18; 18b; 18c) is arranged on a side facing the fluid inlet (16).

3. Solids filter according to claim 1 or 2, **characterized in that** the spacer fabric (18; 18, 19a; 18b, 19b; 18c; 19d) has a height (H) in the range of 3 mm to 60 mm, in particular in the range of 20 mm to 55 mm, and in particular in the range of 30 mm to 50 mm when seen in the direction of flow (3).

4. Solids filter according to one of claims 1 to 3, **characterized in that** the spacer fabric (18; 18, 19a; 18b, 19b; 18c; 19d) has a loop density in the range of 4 to 18 loop rows/cm, in particular in the range of 4 to 10 loop rows/cm, and in particular in the range of 11 to 18 loop rows/cm in a direction transverse to the direction of flow (3).

5. Solids filter according to one of claims 1 to 4, **characterized in that** the spacer fabric (18; 19b; 19d) has a periphery which is at least partially closed.

6. Solids filter according to claim 5, **characterized in that** at least one of the cover layers (21, 22) overlaps with the region formed by the spacer fibers (23) in the direction transverse to the direction of flow (3) and is interwoven with the opposite cover layer (21, 22) for closing.

7. Solids filter according to one of claims 1 to 4, **characterized in that** the spacer fabric (19a; 18b; 18c) has a periphery which is completely open.

8. Solids filter according to one of claims 1 to 7, **characterized in that** several spacer fabrics (18, 19a; 18b, 19b) are arranged in the housing (12) one behind the other, with the loop density thereof increasing in the direction of flow (3).

9. Solids filter according to one of claims 1 to 8, **characterized in that** at least a part of the spacer fibers (23a; 23b; 23c) has an electrostatic effect.

10. Solids filter according to one of claims 1 to 9, **characterized in that** at least one of the filter elements is a foam element (20; 19c; 18d, 20d).

11. Solids filter according to one of claims 1 to 10, **characterized in that** the foam element (20; 19c; 20d) is arranged on a side facing the fluid discharge (17).

12. Vacuum cleaner comprising a solids filter (4; 4a to 4d) according to one of claims 1 to 11.

13. Exhaust gas cleaning system, in particular for a power plant, comprising a solids filter (4; 4a to 4d) according to one of claims 1 to 11.

## Revendications

1. Filtre à particules solides, notamment destiné à un aspirateur ou à un dispositif de traitement de gaz de combustion, comprenant
- un carter (12),
- un système d'alimentation en fluide (16) débouchant dans le carter (12),
- un système d'évacuation de fluide (17), qui
-- est adjoint au système d'alimentation en fluide (16) dans une direction d'écoulement (3), et
-- est établi dans le carter (12),
- plusieurs éléments de filtration (18, 19, 20 ; 18, 19a, 20 ; 18b, 19b ; 18c, 19c ; 18d, 19d, 20d), destinés à récupérer par filtration des particules solides dans un écoulement de fluide (7),
-- qui sont disposés dans le carter (12) entre le système d'alimentation en fluide (16) et le système d'évacuation de fluide (17),
-- au moins un élément de filtration étant conçu sous la forme d'un tricot à double parois (18 ; 18, 19a ; 18b, 19b ; 18c ; 19d), qui
--- présente deux couches de revêtement (21, 22), disposées perpendiculairement par rapport à la direction d'écoulement (3), et
--- des fils d'espacement (23 ; 23a ; 23b ; 23c), s'étendant entre les couches de revêtement (21, 22),
**caractérisé en ce**
**que** les éléments de filtration (18, 19, 20 ; 18, 19a, 20 ; 18b, 19b ; 18c, 19c ; 18d, 19d, 20d) sont disposés dans le carter (12) les uns derrière les autres dans la direction d'écoulement (3) de telle manière qu'une construction à plusieurs couches possédant une action de filtration étagée est réalisée,
**qu'**au moins un élément de filtration est conçu sous la forme d'un tricot à double parois (18 ; 18, 19a ; 18b, 19b ; 18c ; 19d) dont les fils d'espacement (23 ; 23a ; 23b ; 23c) forment des groupes de fils d'espacement (24) s'étendant dans un plan sous une forme IXI, et
**qu'**au moins un élément de filtration (19 ; 19a ; 18b ; 18c) est conçu électrostatique.

2. Filtre à particules solides selon la revendication 1, **caractérisé en ce que** le tricot à double parois (18 ; 18b ; 18c) est disposé sur un côté orienté vers le système d'alimentation en fluide (16).

3. Filtre à particules solides selon les revendications 1 ou 2, **caractérisé en ce que** le tricot à double parois (18 ; 18, 19a ; 18b, 19b ; 18c ; 19d) présente une hauteur (H) dans un intervalle de 3 mm à 60 mm, en particulier dans un intervalle de 20 mm à 55 mm, et particulièrement dans un intervalle de 30 mm à 50 mm, dans la direction d'écoulement (3).

4. Filtre à particules solides selon l'une des revendications 1 à 3, **caractérisé en ce que** le tricot à double parois (18 ; 18, 19a ; 18b, 19b ; 18c ; 19d) présente une densité de mailles dans un intervalle de 4 à 18 rangées de mailles/cm, en particulier dans un intervalle de 4 à 10 rangées de mailles/cm, et particulièrement dans un intervalle de 11 à 18 rangées de mailles/cm.

5. Filtre à particules solides selon l'une des revendications 1 à 4, **caractérisé en ce que** le tricot à double parois (18 ; 19b ; 19d) est conçu au moins partiellement fermé sur sa circonférence.

6. Filtre à particules solides selon la revendication 5 **caractérisé en ce qu'**au moins l'une des couches de revêtement (21, 22) chevauche le domaine formé par les fils d'espacement (23), perpendiculairement par rapport à la direction d'écoulement (3), et est reliée avec la couche de revêtement (21, 22) qui lui est opposée pour assurer la fermeture.

7. Filtre à particules solides selon l'une des revendications 1 à 4, **caractérisé en ce que** le tricot à double parois (19a ; 18b ; 18c) est conçu totalement ouvert sur sa circonférence.

8. Filtre à particules solides selon l'une des revendications 1 à 7, **caractérisé en ce que** plusieurs tricots à double parois (18, 19a ; 18b, 19b) sont disposés dans le carter (12), les uns après les autres, et leur densité de mailles augmente dans la direction d'écoulement (3).

9. Filtre à particules solides selon l'une des revendications 1 à 8 **caractérisé en ce qu'**au moins une partie des fils d'espacement (23a ; 23b ; 23c) est conçue électrostatique.

10. Filtre à particules solides selon l'une des revendications 1 à 9 **caractérisé en ce qu'**au moins un des éléments de filtration est conçu sous la forme d'un élément en mousse (20 ; 19c ; 18d, 20d).

11. Filtre selon l'une des revendications 1 à 10 **caractérisé en ce que** l'élément en mousse (20 ; 19c ; 20d) est disposé sur un côté orienté vers le système d'évacuation de fluide (17).

12. Aspirateur comprenant un filtre à particules solides (4 ; 4a à 4d) selon l'une des revendications 1 à 11.

13. Dispositif de traitement de gaz de combustion, notamment destiné à une centrale électrique, comprenant un filtre à particules solides (4 ; 4a à 4d) selon l'une des revendications 1 à 11.
